# EUROPEAN PATENT SPECIFICATION

(11) **EP 2 347 949 B1**
(45) Date of publication and mention of the grant of the patent: **29.04.2015**
(21) Application number: 10818853.3
(22) Date of filing: 24.09.2010
(51) Int. Cl.: B62J 25/00, B62J 17/00, B62K 11/10

(54) **Motorcycle**
Motorrad
Motocyclette

(30) Priority: 25.09.2009 JP 2009220838
(43) Date of publication of application: 27.07.2011
(73) Proprietor: Yamaha Hatsudoki Kabushiki Kaisha, Iwata-shi, Shizuoka 438-8501 (JP)
(72) Inventor: NOMURA, Yasushi, Iwata-shi Shizuoka 438-8501 (JP); SHIBATA, Masanori, Iwata-shi Shizuoka 438-8501 (JP); IKENISHI, Yoshinari, Iwata-shi Shizuoka 438-8501 (JP)
(74) Representative: Grünecker Patent- und Rechtsanwälte PartG mbB
(86) International application number: PCT/JP2010/066541
(87) International publication number: WO 2011/037181

(56) References cited:
- JP-A- 1 233 186
- JP-A- 5 065 086
- JP-A- 9 249 171
- JP-A- H0 492 791
- JP-A- 2009 154 662
- JP-A- 2009 154 662

## Description

The present invention relates to a motorcycle. More particularly, the present invention relates to a motorcycle including a radiator disposed transversely outwards of a crankshaft.

Prior art document JP-A-2009-154662 discloses a scooter type vehicle comprising a vehicle body frame with a head pipe portion, a down frame portion extended downwards from the head pipe portion, a bottom frame portion extended rearwards from a bottom end of the down frame portion, and a rear frame portion extended upwards from a rear end of the bottom frame portion. A first foot rest is disposed over the bottom frame portion. A support portion is connected to the rear frame portion. A second foot rest is attached to the rear frame portion through the support portion. A vehicle body cover is at least partially covering the rear frame portion. An engine includes a transversely extended crankshaft, wherein the engine is pivotably supported by the vehicle body frame. A radiator is disposed transversely outwards of the crankshaft, wherein a portion of the rear frame portion is positioned forwards of the radiator. A portion of the support portion is positioned forwards of the radiator and transversely outwards of the rear frame portion. The vehicle body cover partially covers the support portion and the rear frame portion from a transversely outward side. A first wind guide path is disposed for guiding an air to a transversely outward side of the radiator through a space positioned below the support portion and between the vehicle body cover and the rear frame portion.

Prior art document JP H04 92791 A discloses a motor scooter type motorcycle with a body cover constituted out of a handle cover, a front cover, an under cover, and a side cover. The side cover is constituted out of a front panel surrounding a front seat and right and left side panels. Foot step shelves constituting rear foot step parts are shelf-likely formed on the front half parts of the side panels. A pair of right and left supporting pipes is arranged under the foot step shelves. The left supporting pipe is on the left side of an air introducing cover, the right supporting pipe is on the right side of a radiator, respectively extended to guard engine accessories parts and support the foot step shelves from the underside.

As described in the following JP-A-2009-132356 and the like, the well-known motorcycles include a radiator disposed transversely outwards of a crankshaft (hereinafter referred to as "a side radiator"). The side radiator is normally disposed while its wind receiving surface for receiving airflow is oriented transversely outwards. It should be noted in the present specification that the term "transversely outwards" and its related terms refer to a direction away from the transverse center of the vehicle along the transverse (width) direction. On the other hand, the term "transversely inwards" and its related terms refer to a direction closer to the transverse center of the vehicle along the transverse direction.

When a side radiator is used in a motorcycle, distance is reduced either between a cylinder head and the radiator or between a cylinder body and the radiator. Therefore, distance can be reduced for either a coolant path connecting the cylinder head and the radiator or a coolant path connecting the cylinder body and the radiator. Further, a radiator fan can be directly driven by a crankshaft when the side radiator is used. Simply put, the radiator and its periphery can be simply structured due to usage of the side radiator.

Yet further, usage of the side radiator eliminates necessity to ensure a space positioned forwards of the engine for disposing the radiator and the coolant path/paths. Therefore, the side radiators have been increasingly widely used for a variety of motorcycles including motorcycles with a small engine capacity.

As described above, the side radiator is disposed while the wind receiving surface thereof is oriented transversely outwards. Therefore, the side radiator does not easily receive airflow directly unlike the normal radiators oriented forwards in a plan view. Thus, it is an important matter of concern for motorcycles including a side radiator how the airflow should be guided to the side radiator.

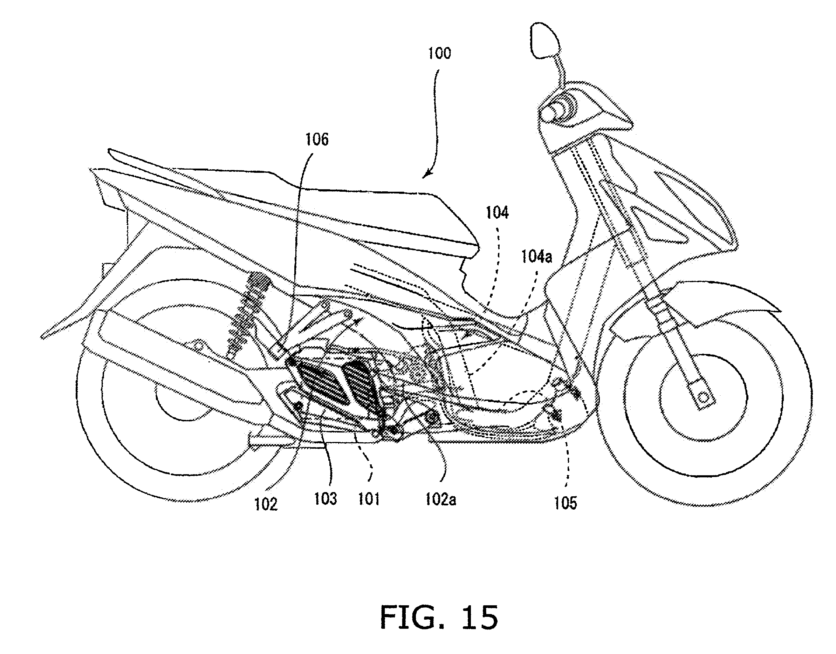

In the motorcycle described in the following JP-A-2009-132356, for instance, a side radiator 101 is disposed while being exposed through a side cover 102, as illustrated in FIG. 15. Further, a wind guide member 103 is disposed transversely outwards of the side radiator 101. The air, flowing transversely outwards of the side cover 102, is guided to the side radiator 101 due to the above structure.

As described above, the wind guide member 103 guides the air, flowing transversely outwards of the side cover 102, to the side radiator 101 in a motorcycle 100 illustrated in FIG. 15. Therefore, it is necessary to dispose a rear end 102a of a portion of the side cover 102 positioned in front of the side radiator 101, in a transversely inward position as much as possible for efficiently guiding the airflow to the side radiator 101. However, a rear frame forming a portion of a vehicle body frame is normally disposed transversely inwards of the rear end 102a. Therefore, it is difficult to dispose the rear end 102a in a transversely inward position.

As a method of disposing the rear end 102a in a transversely inward position as much as possible, it is possible to assume a method of disposing a rear frame 104a of a vehicle body frame 104, positioned forwards of the side radiator 101, in a position far away from the side radiator 101 in a longitudinal (back and forth) direction, as illustrated in FIG. 15. In this case, positional interference can be avoided between the rear end 102a and the rear frame 104a in the transverse direction. The rear end 102a can be thereby easily disposed in a transversely inward position. Therefore, it is possible to efficiently guide the airflow to the side radiator 101.

However, a drawback is produced when the rear frame 104 is disposed forwards away from the side radiator 101. Simply put, a foot rest 105 for putting rider's feet is required to have a small longitudinal length.

Further, positioning of tandem foot rests 106 is also a matter of concern for efficiently guiding the air, flowing transversely outwards of the side cover 102, to the side radiator 101. Specifically, the airflow is blocked from being guided to the side radiator 101 by the tandem foot rests 106 and rider's feet put thereon when the tandem foot rests 106 are disposed forwards or transversely outwards of the side radiator 101. Therefore, it is necessary to dispose the tandem rests 106 above the side radiator 101 or rearwards of the side radiator 101 for efficiently guiding the airflow to the side radiator 101. Simply put, the motorcycle 100 also has a drawback that a less flexible arrangement is allowed for the tandem foot rests 106.

It is an object of the present invention to provide a motorcycle including a side radiator for efficiently guiding the airflow to the radiator, increasing the longitudinal size of a first foot rest, and highly flexibly disposing a second foot rest.

According to the present invention said object is solved by a motorcycle having the features of independent claim 1. Preferred embodiments are laid down in the dependent claims.

Accordingly, it is provided a motorcycle that includes a vehicle body frame, a first foot rest, a support portion, a second foot rest, a vehicle body cover, an engine and a radiator. The vehicle body frame includes a head pipe portion, a down frame portion, a bottom frame portion and a rear frame portion. The down frame portion is extended downwards from the head pipe portion. The bottom frame portion is extended rearwards from a bottom end of the down frame portion. The rear frame portion is extended upwards from a rear end of the bottom frame portion. The first foot rest is disposed over the bottom frame portion. The support portion is connected to the rear frame portion. The second foot rest is attached to the rear frame portion through the support portion. The vehicle body cover at least partially covers the rear frame portion. The engine includes a transversely extended crankshaft. The engine is pivotably supported by the vehicle body frame. The radiator is disposed transversely outwards of the crankshaft. A portion of the rear frame portion is positioned forwards of the radiator. At least a portion of the support portion is positioned forwards of the radiator and transversely outwards of the rear frame portion. The vehicle body cover at least partially covers the support portion and the rear frame portion from a transversely outward side. Further, a first wind guide path is disposed in the motorcycle. The first wind guide path guides air to a transversely outward side of the radiator through a space positioned above or below the support portion and between the vehicle body cover and the rear frame portion. The vehicle body cover includes an air intake portion for taking in the air into the first wind guide path.

### ADVANTAGEOUS EFFECTS OF INVENTION

According to the present invention, a motorcycle including a side radiator is provided for efficiently guiding the airflow to a radiator, increasing the longitudinal size of a first foot rest, and highly flexibly disposing a second foot rest.

### BRIEF DESCRIPTION OF THE DRAWINGS

- FIG. 1: is a schematic right side view of a motorcycle.
- FIG. 2: is a schematic plan view of the motorcycle.
- FIG. 3: is a schematic right side view of the motorcycle for explaining a vehicle body frame.
- FIG. 4: is a schematic perspective view of the vehicle body frame.
- FIG. 5: is a partial schematic cross-sectional view of an engine.
- FIG. 6: is a schematic right side view of the engine.
- FIG. 7: is a schematic outline plan view for explaining arrangement of the engine, the vehicle body frame, a radiator and tandem foot rests.
- FIG. 8: is a schematic front view of the motorcycle without illustration of a front fork, a front wheel, a handle and the like.
- FIG. 9: is a schematic cross-sectional view of the motorcycle sectioned along a line IX-IX in FIG. 8.
- FIG. 10: is a schematic cross-sectional view of a wind guide member along a vehicle transverse direction.
- FIG. 11: is a schematic cross-sectional view of the wind guide member along a horizontal direction.
- FIG. 12: is a schematic cross-sectional view of the motorcycle sectioned along a line XII-XII in FIG. 1.
- FIG. 13: is a schematic right side view of a motorcycle according to another exemplary embodiment.
- FIG. 14: is a partial schematic perspective view of the motorcycle according to another exemplary embodiment.
- FIG. 15: is a schematic right side view of a motorcycle described in JP-A-2009-132356.

### DESCRIPTION OF EMBODIMENTS

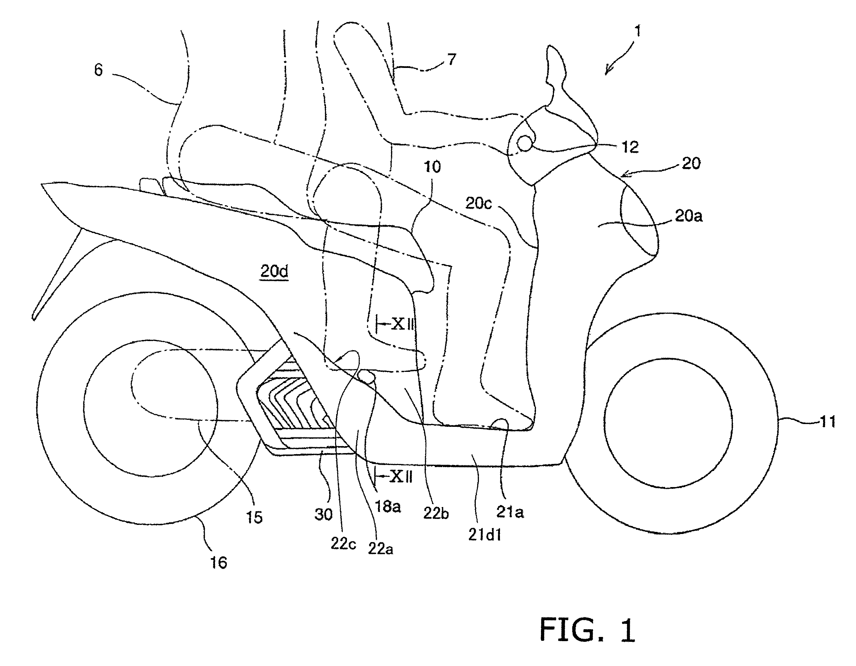

Preferred exemplary embodiments implementing the present invention will be hereinafter explained by exemplifying a motorcycle 1 illustrated in FIG. 1. It should be noted that directional terms such as "front", "rear", "right" and "left" and their related terms hereinafter refer to directions seen from a rider seated on a seat 10.

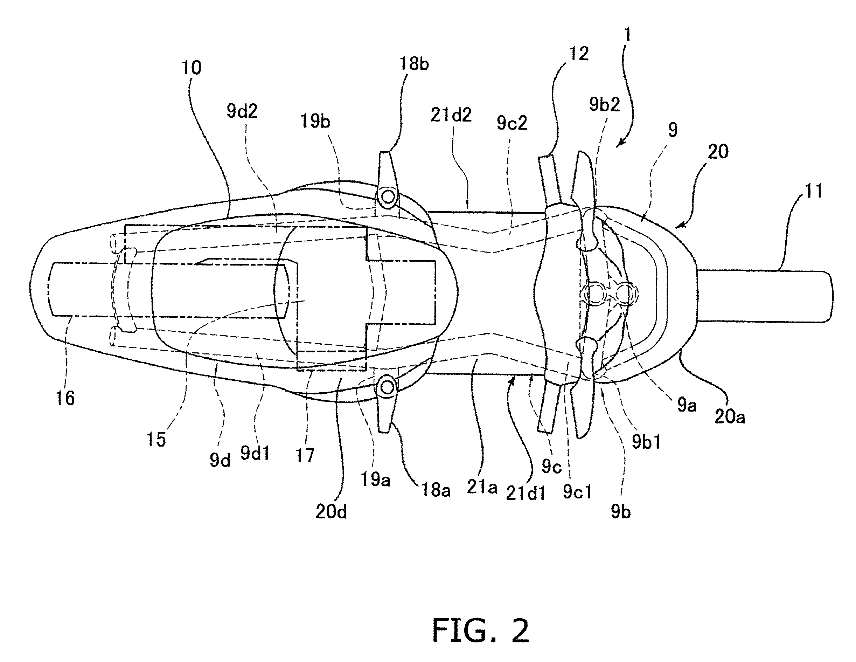

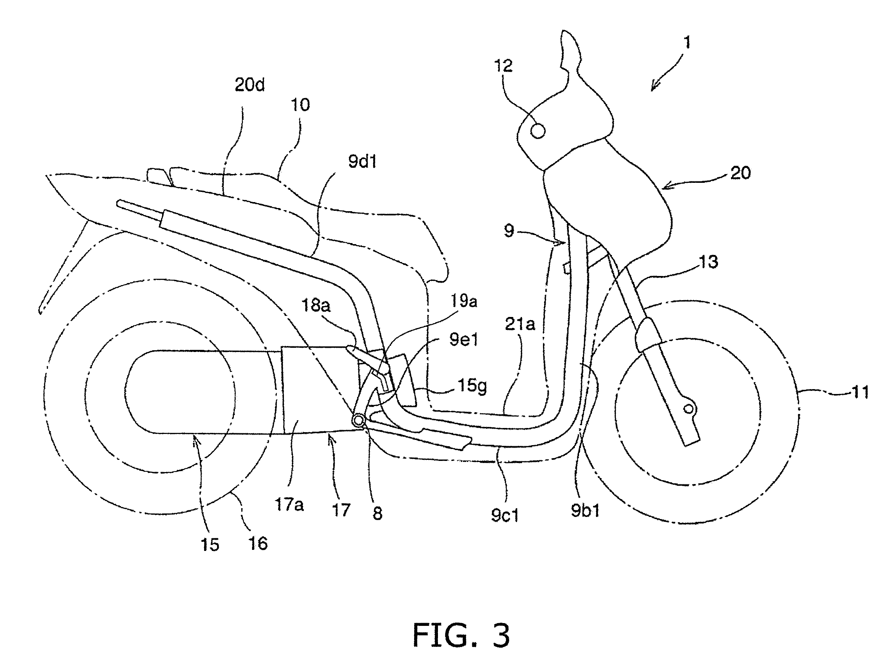

FIG. 1 is a schematic right side view of the motorcycle. FIG. 2 is a schematic plan view of the motorcycle. FIG. 3 is a schematic right side view of the motorcycle for explaining a vehicle body frame.

The motorcycle 1 illustrated in FIG. 1 to 3 is a scooter including an engine 15 of a unit swing type. More specifically, the motorcycle 1 is a scooter for two-people riding and includes a foot board 21a and a tandem foot rest 18a. The foot board 21a is extended along a transverse (width) direction of the vehicle and functions as a first foot rest. The tandem foot rest 18a functions as a second foot rest.

### (Vehicle body frame 9)

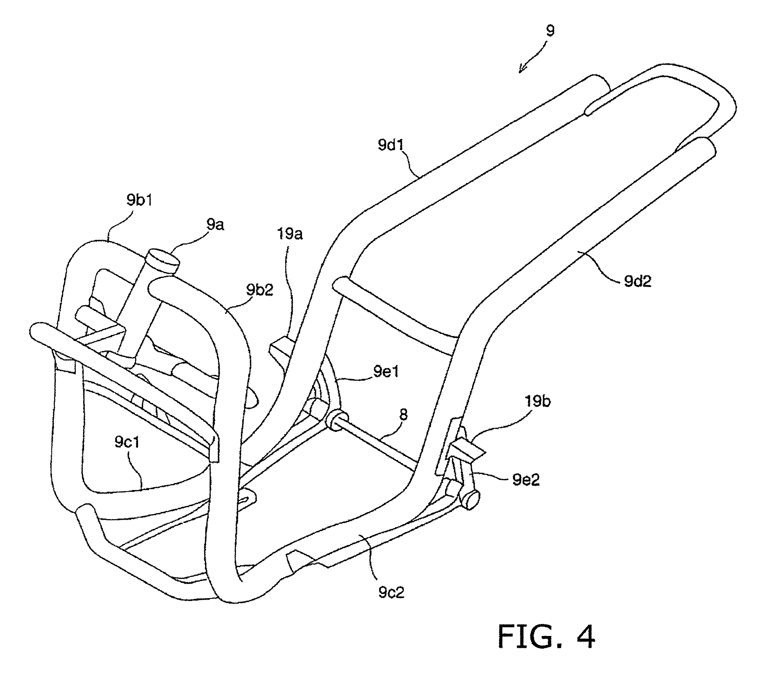

As illustrated in FIGS. 2 and 3, the motorcycle 1 includes a vehicle body frame 9. FIG. 4 is a schematic perspective view of the vehicle body frame 9. As illustrated in FIG. 4, the vehicle body frame 9 includes a head pipe portion 9a. A right down frame portion 9b1 and a left down frame portion 9b2 are connected to the head pipe portion 9a. Each of the down frame portions 9b1 and 9b2 is extended downwards from the head pipe portion 9a. More specifically, each of the down frame portions 9b1 and 9b2 is extended transversely outwards from the head pipe portion 9a, then bent at an intermediate portion thereof, and extended therefrom downwards. A right bottom frame portion 9c1 is connected to the bottom end of the right down frame portion 9b1, whereas a left bottom frame portion 9c2 is connected to the bottom end of the left down frame portion 9b2. As illustrated in FIG. 3, the right bottom frame portion 9c1 is roughly horizontally extended rearwards from the bottom end of the right down frame portion 9b1. The left bottom frame portion 9c2 is roughly horizontally extended rearwards from the bottom end of the left down frame portion 9b2.

A right rear frame portion 9d1 is connected to the rear end of the right bottom frame portion 9c1. The right rear frame portion 9d1 is extended rearwards and obliquely upwards from the rear end of the right bottom frame portion 9c1. A left rear frame portion 9d2 is connected to the rear end of the left bottom frame portion 9c2. The left rear frame portion 9d2 is extended rearwards and obliquely upwards from the rear end of the left bottom frame portion 9c2.

As illustrated in FIG. 3, the seat 10 is disposed over the rear frame portions 9d1 and 9d2. The seat 10 is a tandem seat for allowing a rider 7 and a passenger 6 (see FIG. 1) to be seated thereon.

During travelling of the motorcycle 1, the passenger 6 puts his/her feet on the right tandem foot rest 18a and a left tandem foot rest 18b. As illustrated in FIG. 3, the tandem foot rests 18a and 18b are disposed forwards of a radiator 17 to be described while being disposed transversely outwards of the rear frame portions 9d1 and 9d2. Further, the tandem foot rests 18a and 18b are positioned transversely outwards of the radiator 17. The right tandem foot rest 18a is connected to the right rear frame portion 9d1 through a right tandem foot bracket 19a illustrated in FIG. 4. The left tandem foot rest 18b is connected to the left rear frame portion 9d2 through a left tandem foot bracket 19b. In other words, the tandem foot brackets 19a and 19b correspond to a support portion for supporting the tandem foot rests 18a and 18b.

Specifically, the right tandem foot bracket 19a is extended transversely outwards (i.e., rightwards) from the right rear frame portion 9d1, as illustrated in FIG. 2. Therefore, the right tandem foot bracket 19a is positioned transversely outwards of the right rear frame portion 9d1. The right tandem foot rest 18a is rotatably attached to the outward end of the right tandem foot bracket 19a. The left tandem foot bracket 19b is extended transversely outwards (i.e., leftwards) from the left rear frame portion 9d2. Therefore, the left tandem foot bracket 19b is positioned transversely outwards of the left rear frame portion 9d2. Further, the left tandem foot bracket 19b is positioned transversely outwards of the radiator 17 to be described. The left tandem foot rest 18b is rotatably attached to the outward end of the left tandem foot bracket 19b.

As illustrated in FIG. 3, the tandem foot brackets 19a and 19b are positioned forwards of the radiator 17. The tandem foot brackets 19a and 19b are positioned lower than the top end of the radiator 17. Further, the tandem foot brackets 19a and 19b are positioned higher than the bottom end of the radiator 17.

A steering shaft (not illustrated in the figures) is rotatably inserted into the head pipe portion 9a illustrated in FIG. 4. The steering shaft is connected to a handle 12 illustrated in FIGS. 1 to 3 and a front fork 13 illustrated in FIG. 3. A front wheel 11 is rotatably supported by the bottom end of the front fork 13.

As illustrated in FIG. 4, the vehicle body frame 9 is provided with a pair of a right bracket 9e1 and a left bracket 9e2. The right bracket 9e1 is connected to the rear end of the bottom frame portion 9c1 and the rear frame portion 9d1, whereas the left bracket 9e2 is connected to the rear end of the bottom frame portion 9c2 and the rear frame portion 9d2. A pivot shaft 8 is attached to the brackets 9e1 and 9e2. As illustrated in FIG. 3, the engine 15 of a unit swing type is pivotably attached to the pivot shaft 8. In other words, the engine 15 is pivotably supported by the vehicle body frame 9 through the brackets 9e1 and 9e2 and the pivot shaft 8.

### (Engine 15)

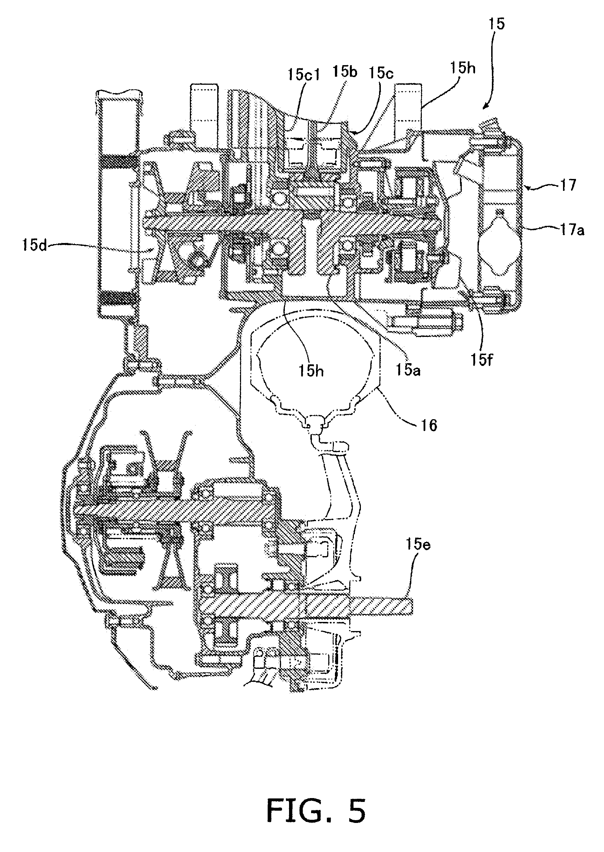

Next, the engine 15 will be explained with reference to mainly FIGS. 5 to 7.

As illustrated in FIG. 5, the engine 15 includes a crankshaft 15a. The crankshaft 15a is extended in the transverse direction of the vehicle. In other words, the axis of the crankshaft 15a is arranged in parallel to the transverse direction of the vehicle. The crankshaft 15a is accommodated in a crankcase 15h.

A cylinder body 15c is connected to the front end of the crankcase 15h. The cylinder body 15c includes a cylinder 15c1 having a cylindrical shape in the inside thereof. The cylinder 15c1 accommodates a piston (not illustrated in the figures). The piston is movable in the cylinder 15c1. The piston is connected to the crankshaft 15a through a connecting rod (i.e., conrod) 15b.

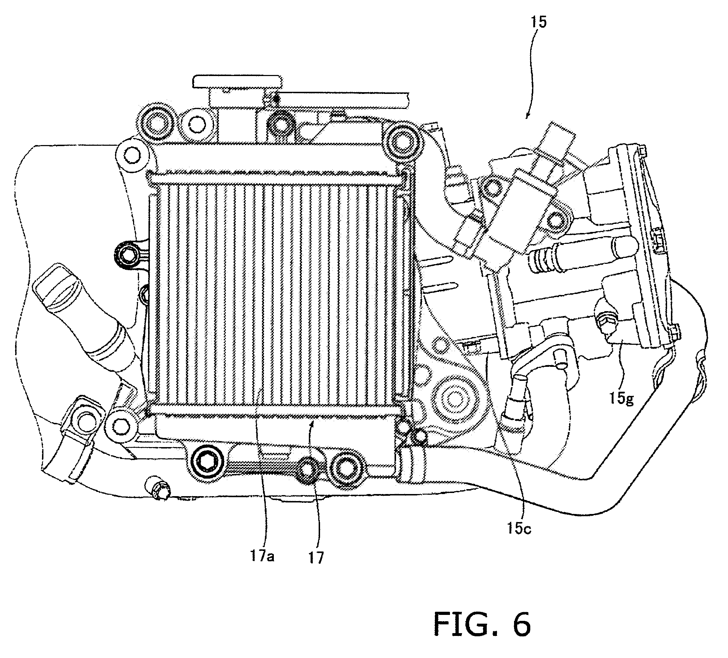

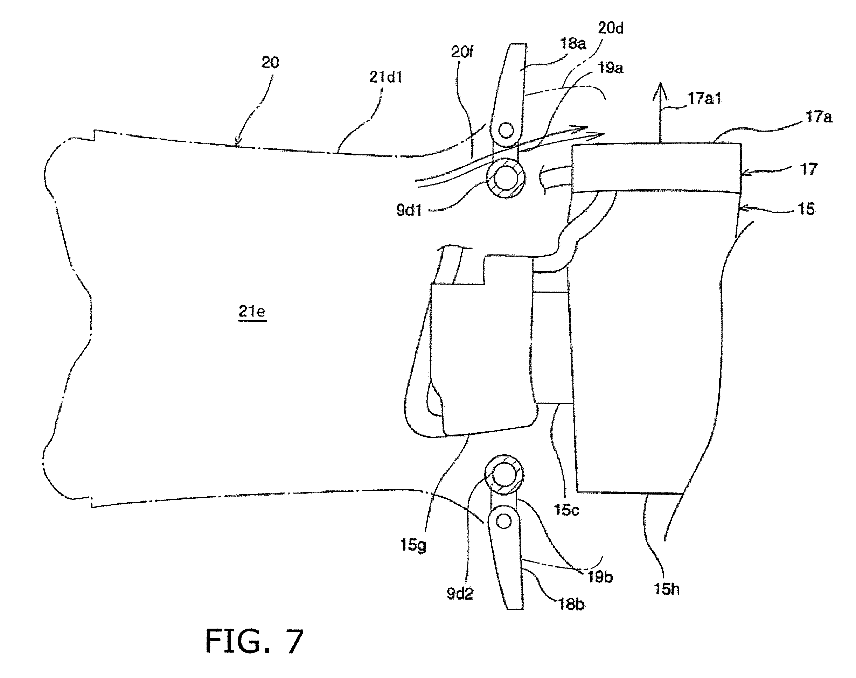

As illustrated in FIGS. 6 and 7, a cylinder head 15g is connected to the front end of the cylinder body 15c. As illustrated in FIGS. 3 and 7, the cylinder head 15g is positioned transversely between the right rear frame portion 9d1 and the left rear frame portion 9d2 (see FIG. 4). In other words, the engine 15 is pivotably attached to the vehicle body frame 9 while the cylinder head 15g is positioned transversely between the rear frame portions 9d1 and 9d2.

As illustrated in FIG. 5, a transmission 15d is disposed on the left end of the crankshaft 15a within the crankcase 15h. Rotations of the crankshaft 15a are transmitted to an output shaft 15e through the transmission 15d. A rear wheel 16 attached onto the output shaft 15e is thereby rotated.

### (Radiator 17)

As illustrated in FIGS. 5 to 7, the radiator 17 is disposed transversely outwards of the engine 15. Specifically, the radiator 17 is disposed transversely outwards of the crankshaft 15a. More specifically, the radiator 17 is disposed rightwards of the crankshaft 15a while being disposed outwards of the crankcase 15h. The radiator 17 is a device configured to cool down the coolant (e.g., cooling water) for cooling down the cylinder body 15c and the cylinder head 15g illustrated in FIG. 6.

In the present exemplary embodiment, the air flowing transversely outwards of the radiator 17 is inhaled into the radiator 17 in response to rotations of a radiator fan 15f disposed on the right end of the crankshaft 15a. The radiator 17 and the coolant within the radiator 17 are thereby cooled down.

Next, arrangement of the radiator 17 in the present exemplary embodiment will be explained.

The radiator 17 includes a main surface 17a as a wind receiving surface to mainly receive the airflow. The radiator 17 is disposed while the main surface 17a is oriented transversely outwards. In other words, a normal line 17a1 (see FIG. 7) of the main surface 17a is oriented transversely outwards. Simply out, the radiator 17 is disposed along the longitudinal direction. In the present exemplary embodiment, the normal line 17a1 of the main surface 17a is arranged in parallel to the transverse direction of the vehicle.

The expression "the main surface 17a is oriented transversely outwards" herein refers to a condition that an angle of 45 degrees or less is formed between the normal line 17a1 of the main surface 17a and the transversely outward direction. As illustrated in FIG. 7, the radiator 17 is disposed rearwards of the right rear frame portion 9d1 while being overlapped with the right rear frame portion 9d1 in a front view, i.e., in the longitudinal direction. In other words, the right rear frame portion 9d1 is positioned forwards of the radiator 17.

### (Vehicle body cover 20)

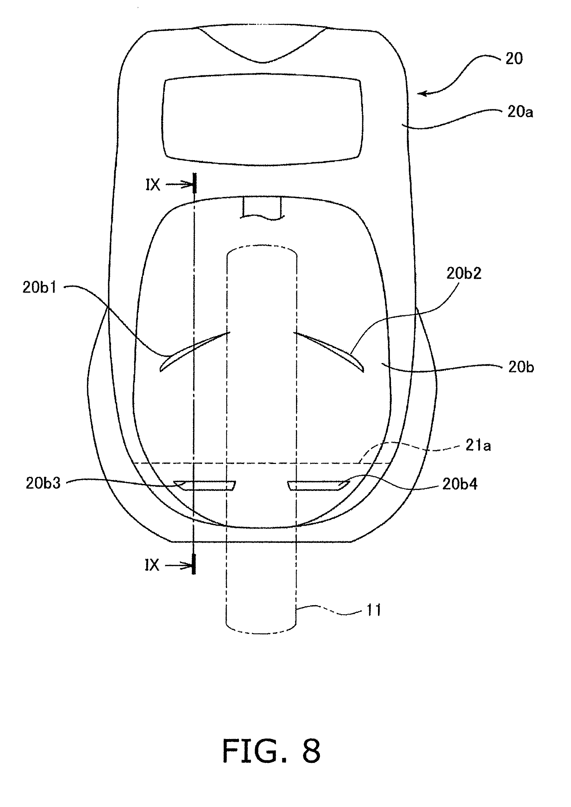

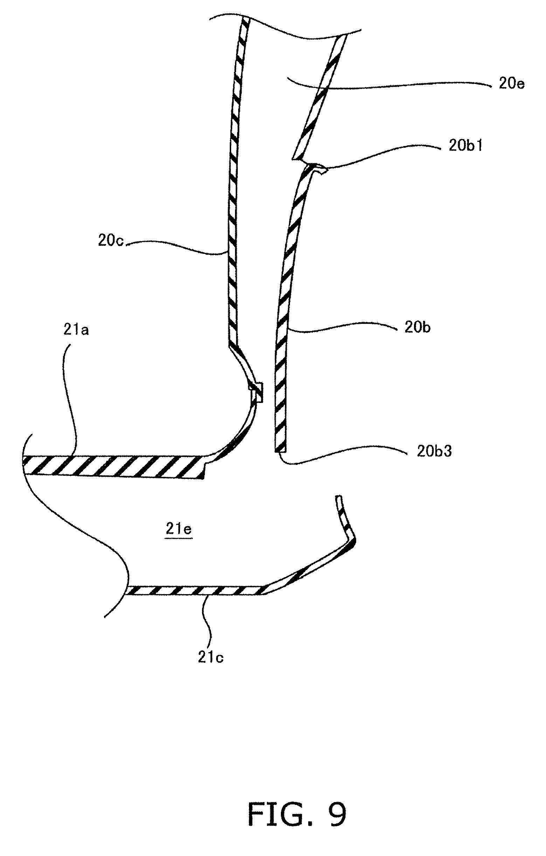

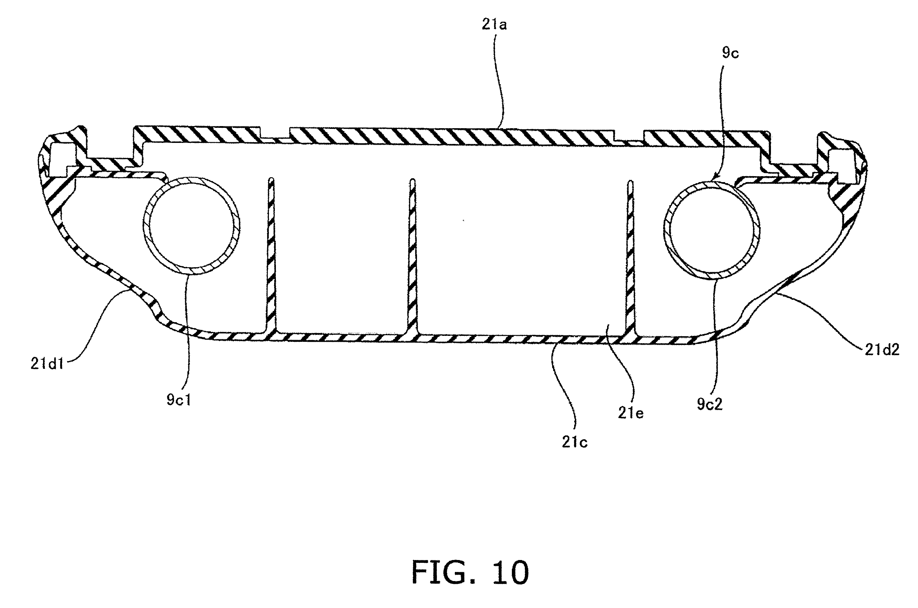

As illustrated in FIGS. 1 and 2, the motorcycle 1 includes a vehicle body cover 20 for partially covering the vehicle body. The vehicle body cover 20 includes a front cover 20a, an inner panel 20b illustrated in FIGS. 8 and 9, a leg shield 20c illustrated in FIGS. 1 and 9, a side cover 20d illustrated in FIG. 1, the foot board 21a, lower covers 21d1 and 21d2 illustrated in FIG. 10, and a bottom cover 21c. The front cover 20a covers the head pipe portion 9a illustrated in FIG. 4 from its front side and partially covers the front portion of the vehicle from its transversely outward sides. As illustrated in FIGS. 8 and 9, the inner panel 20b is attached to the front cover 20a while being disposed forwards of the bottom portion of the front cover 20a. On the other hand, the leg shield 20c is attached to the front cover 20a while being disposed rearwards of the front cover 20a.

As illustrated in FIGS. 1 and 2, the side cover 20d is disposed under the seat 10. The side cover 20d at least partially covers the engine 15, the radiator 17, the rear frame portions 9d1 and 9d2, and the tandem foot brackets 19a and 19b from their front sides. Further, the side cover 20d covers the tandem foot brackets 19a and 19b and the rear frame portions 9d1 and 9d2 from their transversely outward sides. Specifically in the present exemplary embodiment, the side cover 20d covers substantially the entirety of the tandem foot brackets 19a and 19b and the rear frame portions 9d1 and 9d2.

Further in the present exemplary embodiment, the side cover 20d at least partially covers the main surface 17a of the radiator 17 from its transversely outward side, as illustrated in FIG. 3. Specifically, the side cover 20d partially covers the front portion of the main surface 17a of the radiator 17 from its transversely outward side.

As mainly illustrated in FIG. 3, the foot board 21 a is disposed between the leg shield 20c and the side cover 20d of the vehicle body cover 20. The foot board 21a is disposed forwards of the engine 15 and the radiator 17. The foot board 21a is a portion where the rider 7 (see FIG. 1) puts his/her feet during travelling of the motorcycle 1. As illustrated in FIG. 3, the foot board 21 a is disposed between the down frame portions 9b1 and 9b2 and the rear frame portions 9d1 and 9d2 in a side view. As illustrated in FIG. 10, the foot board 21 a is disposed over the bottom frame portions 9c1 and 9c2. The foot board 21a has a transversely flat shape.

The expression "the foot board has a flat shape" refers to a condition that the foot board does not include a convex portion for forming a tunnel portion in the transversely center portion thereof. The expression "the foot board has a flat shape" also refers to a condition that the foot board is flat to some extent for allowing a rider to put his/her feet on any portion thereof. In other words, the foot board may include, for instance, convexo-concaves for an anti-slip purpose or the like.

It should be noted in the present invention that the foot board may not necessarily have an entirely flat shape in the transverse direction of the vehicle. For example, a tunnel portion may be disposed forwards of the seat 10, and a pair of right and left foot boards may be disposed on the both sides of the tunnel portion in the transverse direction of the vehicle and simultaneously disposed forwards of the rear frame portions.

The lower covers 21d1 and 21d2 are disposed under the foot board 21a. The lower covers 21d1 and 21d2 at least partially cover the bottom frame 9c from its transversely outward side. Specifically, the right lower cover 21d1 covers the bottom frame 9c from its right side. The left lower cover 21d2 covers the bottom frame 9c from its left side. The bottom cover 21 c is disposed below the foot board 21 a and the lower covers 21d1 and 21 d2. The bottom cover 21c is disposed under the bottom frame 9c and covers the bottom frame 9c from its bottom side.

As illustrated in FIG. 10, a second wind guide path 21 e is formed by the foot board 21 a, the bottom cover 21 c and the lower covers 21d1 and 21 d2. As hereinafter explained in detail, the second wind guide path 21 e is a path for guiding air to a first wind guide path 20f (see FIG. 7) formed inwards of the side cover 20d through a space positioned below the foot board 21a and between the lower covers 21d1 and 21d2.

As illustrated in FIG. 9, the front end of the wind guide path 21e continues to a space 20e produced between the inner panel 20b and the leg shield 20c. As illustrated in FIGS. 8 and 9, the inner panel 20b includes two upper openings (hereinafter referred to as "a first upper opening 20b1" and "a second upper opening 20b2") and two lower openings (hereinafter referred to as "a first lower opening 20b3" and "a second lower opening 20b4").

The first and second upper openings 20b1 and 20b2 are disposed transversely away from each other. The front wheel 11 is disposed to be overlapped with a portion of the inner panel 20b positioned between the first and second upper openings 20b1 and 20b2 in a front view. More specifically, the front wheel 11 is overlapped with the transversely inward end of the first upper opening 20b1 and the transversely inward end of the second upper opening 20b2 in the front view. On the other hand, the front wheel 11 is not overlapped with the other portion of the first upper opening 20b1 and the other portion of the second upper opening 20b2 in the front view. In the front view, the portions of the first and second upper openings 20b1 and 20b2 not overlapped with the front wheel 11 have an area greater than that of the portions of the first and second upper openings 20b1 and 20b2 overlapped with the front wheel 11. Further, the first and second upper openings 20b1 and 20b2 are positioned higher than the foot board 21a.

The first and second lower openings 20b3 and 20b4 are disposed transversely away from each other. The front wheel 11 is disposed to be overlapped with a portion of the inner panel 20b positioned between the first and second lower openings 20b3 and 20b4 in a front view. More specifically, the front wheel 11 is overlapped with the transversely inward end of the first lower opening 20b3 and the transversely inward end of the second lower opening 20b4 in the front view. On the other hand, the front wheel 11 is not overlapped with the other portion of the first lower opening 20b3 and the other portion of the second lower opening 20b4 in the front view. In the front view, the portions of the first and second lower openings 20b3 and 20b4 not overlapped with the front wheel 11 have an area greater than that of the portions of the first and second lower openings 20b3 and 20b4 overlapped with the front wheel 11. Further, each of the first and second lower openings 20b3 and 20b4 includes a portion positioned lower than the foot board 21a. In the present exemplary embodiment, the first and second lower openings 20b3 and 20b4 are entirely positioned lower than the foot board 21a. It should be noted that only a portion of the first and second lower openings 20b3 and 20b4 may be positioned lower than the foot board 21a.

The space 20e positioned rearwards of the inner panel 20b is communicated with the space disposed forwards of the inner panel 20b through the aforementioned upper openings 20b1 and 20b2 and the aforementioned lower openings 20b3 and 20b4. Therefore, the second wind guide path 21e is communicated with the space disposed forwards of the inner panel 20b through the space 20e, the upper openings 20b1 and 20b2 and the lower openings 20b3 and 20b4. It should be noted that the upper openings 20b1 and 20b2 and the lower openings 20b3 and 20b4 correspond to an air intake portion for taking in air into the first wind guide path through the second wind guide path 21e.

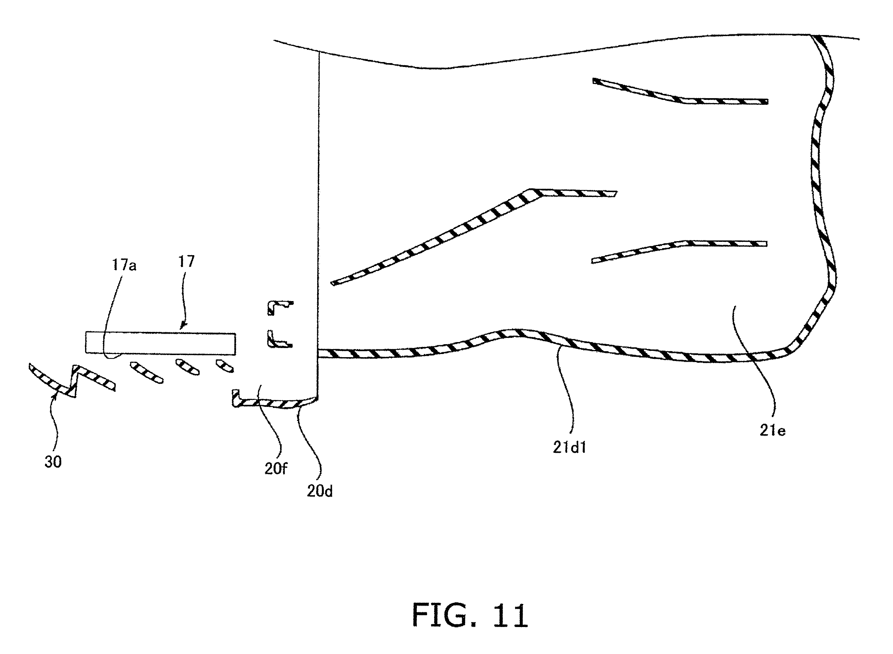

As illustrated in FIGS. 7 and 11, on the other hand, the rear end of the second wind guide path 21e continues to the first wind guide path 20f. The first wind guide path 20f is produced inwards of the side cover 20d in which the engine 15 and the radiator 17 are disposed. Specifically, the first wind guide path 20f is produced inwards of the side cover 20d while being overlapped with the right tandem foot bracket 19a in a plan view. Further, the rear end of the first wind guide path 20f is opened at a position forward of the main surface 17a of the radiator 17 and transversely outward of the main surface 17a of the radiator 17. Therefore, the first wind guide path 20f guides air to the transversely outward side of the radiator 17 through the spaces that are positioned above and below the right tandem foot bracket 19a and are positioned between the side cover 20d and the right rear frame portion 9d1. Therefore, the air flows into the inside of the front portion of the vehicle body cover 20 through the aforementioned upper openings 20b1 and 20b2 and the aforementioned lower openings 20b3 and 20b4 and then the air is supplied to the main surface 17a of the radiator 17 through the second wind guide path 21e and the first wind guide path 20f.

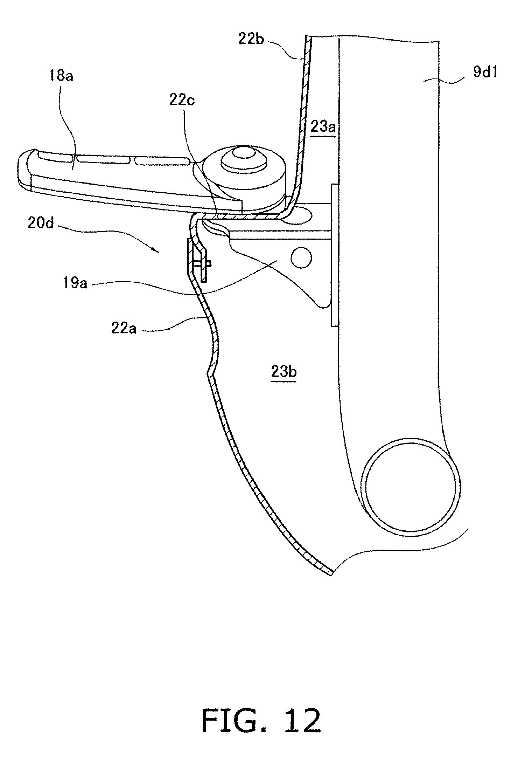

More specifically, a portion of the side cover 20d, positioned lower than the right tandem foot bracket 19a, is bulged transversely outwards, as illustrated in FIG. 12. It should be noted that FIG. 12 is a schematic cross-sectional view of the motorcycle 1 sectioned along a line XII-XII in FIG. 1. The side cover 20d includes a lower side cover portion 22a, an upper side cover portion 22b, and a stepped portion 22c. The lower side cover portion 22a is a portion of the side cover 20d positioned below the right tandem foot bracket 19a. The upper side cover portion 22b is a portion of the side cover 20d positioned above the right tandem foot bracket 19a. The lower side cover portion 22a is positioned transversely outwards of the upper side cover portion 22b. The stepped portion 22c has a transversely extended shape. The stepped portion 22c connects the lower end of the upper side cover portion 22b and the upper end of the lower side cover portion 22a. The aforementioned right tandem foot bracket 19a is positioned under the stepped portion 22c. The right tandem foot rest 18a is disposed on the stepped portion 22c. Further, the stepped portion 22c is slanted for positioning the rear portion thereof higher than the front portion thereof, as illustrated in FIG. 1.

As illustrated in FIG. 12, a portion of the first wind guide path 20f, positioned over the right tandem foot bracket 19a, is referred to as an upper path 23a. A portion of the first wind guide path 20f, positioned under the right tandem foot bracket 19a, is referred to as a lower path 23b. As described above, the lower side cover portion 22a is positioned transversely outwards of the upper side cover portion 22b. Therefore, the lower path 23b has a cross-sectional area greater than that of the upper path 23a. Further, the aforementioned second wind guide path 21e is positioned below the right tandem foot bracket 19a, as illustrated in FIG. 1. Therefore, a larger amount of air flows through the lower path 23b than through the upper path 23a. It should be noted that air also flows through the upper path 23a although the amount of air flowing through the upper path 23a is less than the amount of air flowing through the lower path 23b.

Further, a wind guide member 30 is disposed transversely outwards of the radiator 17, as illustrated in FIGS. 1 and 11. Specifically, the wind guide member 30 is positioned transversely outwards of the radiator 17 while being positioned inwards of the rear end of the side cover 20d, as illustrated in FIG. 11. In other words, the wind guide member 30 is positioned rearwards of the rear opening of the first wind guide path 20f. The airflow from the first wind guide path 20f is thereby efficiently guided to the main surface 17a of the radiator 17 by the wind guide member 30.

In the present exemplary embodiment as explained above, the airflow is efficiently supplied to the radiator 17 through the first wind guide path 20f produced inwards of the side cover 20d. Therefore, it is not necessarily required to supply the air flowing outwards of the side cover 20d to the radiator 17. In other words, it is not necessarily required to dispose the rear end of the partial side cover 20d positioned forwards of the radiator 17 in a transversely inward position. The right rear frame portion 9d1 can be thereby disposed adjacent to the radiator 17 in the longitudinal direction, as illustrated in FIG. 3. In other words, the rear frame portions 9d1 and 9d2 can be disposed in further rearward positions. Consequently, it is possible to increase the longitudinal length of the foot board 21 a positioned forwards of the rear frame portions 9d1 and 9d2.

Further, the airflow is hardly blocked from being supplied to the radiator 17 through the first wind guide path 20f, even if the right tandem foot rest 18a is disposed transversely outwards of the side cover 20d while being disposed forwards and transversely outwards of the radiator 17. Therefore, it is also possible to dispose the tandem foot rests 18a and 18b forwards and transversely outwards of the radiator 17 in the present exemplary embodiment. In other words, the tandem foot rests 18a and 18b can be highly flexibly arranged in the present exemplary embodiment.

Overall, according to the present exemplary embodiment, it is possible not only to efficiently guide the airflow to the radiator 17 but also to increase the longitudinal size of the foot board 21 a and highly flexibly arrange the tandem foot rests 18a and 18b.

Further, the tandem foot bracket 19a and the first wind guide path 20f are overlapped with each other in a plan view. It is thereby possible to further reduce the transverse size of the motorcycle 1 than a case that the tandem foot bracket 19a and the first wind guide path 20f are disposed not to be overlapped with each other in a plan view, for instance.

Further in the present exemplary embodiment, the right and left rear frame portions 9d1 and 9d2 can be disposed in further rearward positions, as described above. It is thereby possible to reduce the distance between the tandem foot rests 18a and 18b and the rear frame portions 9d1 and 9d2. Therefore, large-sized tandem foot brackets are not necessarily required as the tandem foot brackets 19a and 19b, and the tandem foot rests 18a and 18b can be easily attached to the rear frame portions 9d1 and 9d2, respectively.

Specifically in the present exemplary embodiment, the tandem foot rests 18a and 18b are disposed transversely outwards of the rear frame portions 9d1 and 9d2. Therefore, the tandem foot rests 18a and 18b can be easily attached to the rear frame portions 9d1 and 9d2.

Further in the present exemplary embodiment, the side cover 20d, disposed transversely outwards of the first wind guide path 20f, at least partially covers the main surface 17a of the radiator 17. Specifically, the side cover 20d partially covers the front portion of the main surface 17a of the radiator 17. Therefore, it is possible to further effectively supply the air flowing through the first wind guide path 20f to the radiator 17. Consequently, it is possible to enhance a performance of cooling down the engine 15. Further, the airflow is supplied to the first wind guide path 20f through the second wind guide path 21e produced under the foot board 21a. Therefore, it is possible to enhance the efficiency of supplying the airflow to the first wind guide path 20f. In other words, it is possible to further effectively supply the airflow to the radiator 17. Consequently, it is possible to further enhance the performance of cooling down for the engine 15.

Further in the present exemplary embodiment, the inner panel 20b includes the upper openings 20b1 and 20b2 and the lower openings 20b3 and 20b4. It is accordingly possible to further efficiently guide the airflow to the second wind guide path 21 e and the first wind guide path 20f through the upper openings 20b1 and 20b2 and the lower openings 20b3 and 20b4.

An exemplary embodiment of the present invention has been explained above. However, the present invention is not limited to the aforementioned exemplary embodiment and a variety of changes can be made for the present invention without departing from the scope of the present invention as defined in the appended claims.

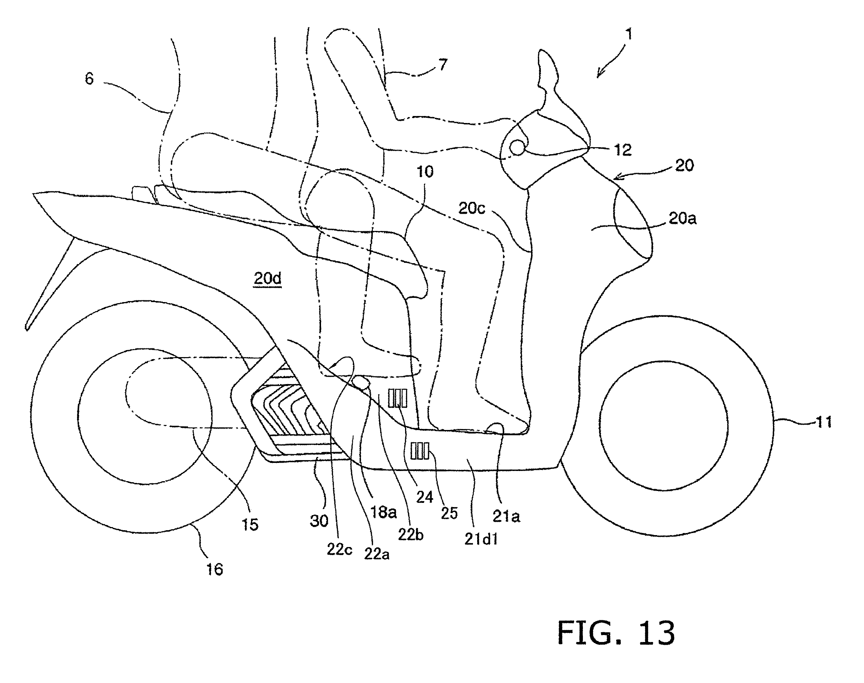

In the aforementioned exemplary embodiment, the inner panel 20b includes the upper openings 20b1 and 20b2 and the lower openings 20b3 and 20b4 as the air intake portion for taking in air into the first wind guide path. However, the air intake portion may not be necessarily formed in the inner panel 20b, and may be formed in any portion of the vehicle body cover 20 such as the bottom cover 21c. For example, the air intake portion may be formed in the side cover 20d. Alternatively, the air intake portion may be formed in the lower covers 21d1 and 21d2. Specifically, an opening portion 24 may be formed as the air intake portion in the lateral surface of the side cover 20d, as illustrated in FIG. 13. Further, opening portions 25 may be formed in the lower covers 21d1 and 21d2. Although not illustrated in the figures, an opening portion may be alternatively formed in the front surface of the side cover 20d disposed under the front end of the seat 10.

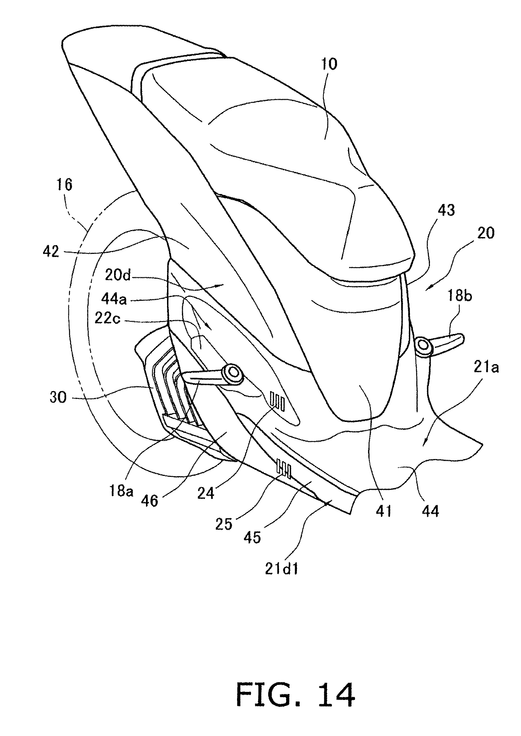

The aforementioned portions forming the vehicle body cover 20 may be formed as a plurality of components. For example, the vehicle body cover 20 may include first to sixth cover components 41 to 46, as illustrated in FIG. 14. The cover components are separately produced components. The first cover component 41 is positioned under the front end of the seat 10. Further, the first cover component 41 is positioned under the both right and left sides of the front portion of the seat 10. The first cover component 41 forms the upper portion of the front surface of the aforementioned side cover 20d. The second cover component 42 is positioned rearwards of the first cover component 41 while being positioned under the rear portion of the seat 10. The second cover component 42 forms the upper portion of the right surface of the aforementioned side cover 20d. The third cover component 43 is disposed roughly bilaterally symmetric to the second cover component 42. The third cover component 43 forms the upper portion of the left surface of the aforementioned side cover 20d. The fourth cover component 44 is positioned under the first cover component 41, the second cover component 42 and the third cover component 43. The fourth cover component 44 forms the foot board 21a and a portion of the both right and left surfaces of the side cover 20d including the aforementioned stepped portion 22c. Specifically, the fourth cover component 44 includes a recessed portion 44a on the right surface thereof, and the recessed portion 44a is recessed transversely inwards. The bottom surface of the recessed portion 44a forms the aforementioned stepped portion 22c. The left surface of the fourth cover component 44 has a shape roughly bilaterally symmetric to the right surface thereof. The fifth cover component 45 is positioned under the fourth cover component 44. The fifth cover component 45 forms a portion of the aforementioned lower cover 21d1. The sixth cover component 46 is positioned under the fourth cover component 44 while being positioned rearwards of the fifth cover component 45. The sixth cover component 46 forms a portion of the aforementioned lower cover 21d1 and the lower portion of the right surface of the side cover 20d. It should be noted that a seventh cover component is disposed bilaterally symmetric to the fifth cover component 45 while an eighth cover component is disposed bilaterally symmetric to the sixth cover component 46, although these cover components are not illustrated in the figures. The seventh cover component forms the lower cover 21 d2 while the eighth cover component forms the lower portion of the left surface of the side cover 20d. When the vehicle body cover 20 is thus divided into a plurality of components, the aforementioned air intake portion may be formed on the plural components forming the vehicle body cover 20 across their boundary/boundaries. For example, the opening portion 25 may be formed on the fifth cover component 45 and the sixth cover component 46 across their boundary, as illustrated in FIG. 14. It should be noted that an aspect of dividing the vehicle body cover 20 into a plurality of components may not be limited to the above. Further, a portion or all of the aforementioned first to sixth cover components 41 to 46 and the aforementioned seventh and eighth cover components may be integrally formed.

The tandem foot brackets 19a and 19b, functioning as the support portion, may be integrally formed with the rear frame portions 9d1 and 9d2, respectively. Alternatively, the tandem foot brackets 19a and 19b may be separately formed from the rear frame portions 9d1 and 9d2, respectively. In this case, the tandem foot brackets 19a and 19b may be fixed to the rear frame portions 9d1 and 9d2, respectively, by means of either fixation members (e.g., bolts) or welding.

The first wind guide path 20f may be configured for allowing roughly the same amount of air to flow above and below the right tandem foot bracket 19a. Alternatively, the first wind guide path 20f may be configured for allowing air to flow either only above or only below the right tandem foot bracket 19a.

In the aforementioned exemplary embodiment, the first wind guide path 20f is configured to pass above and below the right tandem foot bracket 19a. However, the first wind guide path may be configured to pass at least either above or below the left tandem foot bracket 19b while the radiator 17 is disposed on the left side of the engine 15.

### INDUSTRIAL APPLICABILITY

According to the present invention, a motorcycle can be produced for efficiently guiding airflow to a radiator, increasing the longitudinal size of a first foot rest, and highly flexibly arranging a second foot rest. Therefore, the present invention is useful as the invention for motorcycles.

### REFERENCE SIGNS LIST

- 1: Motorcycle
- 9: Vehicle body frame
- 9a: Head pipe portion
- 9b1: Right down frame portion
- 9b2: Left down frame portion
- 9c1: Right bottom frame portion
- 9c2: Left bottom frame portion
- 9d1: Right rear frame portion
- 9d2: Left rear frame portion
- 10: Seat
- 15: Engine
- 15a: Crankshaft
- 17: Radiator
- 18a, 18b: Tandem foot rest
- 19a, 19b: Tandem foot bracket
- 20d: Side cover
- 20f: First wind guide path
- 21a: Foot board
- 21e: Second wind guide path

## Claims

1. A motorcycle, comprising:
a vehicle body frame (9) including: a head pipe portion (9a); a down frame portion (9b1, 9b2) extended downwards from the head pipe portion (9a); a bottom frame portion (9c1, 9c2) extended rearwards from a bottom end of the down frame portion (9b1, 9b2); and a rear frame portion (9d1, 9d2) extended upwards from a rear end of the bottom frame portion (9c1, 9c2);
a first foot rest (21 a) disposed over the bottom frame portion (9c1, 9c2);
a support portion (19a, 19b) connected to the rear frame portion (9d1, 9d2);
a second foot rest (18a, 18b) attached to the rear frame portion (9d1, 9d2) through the support portion (19a, 19b);
a vehicle body cover (20) at least partially covering the rear frame portion (9d1, 9d2);
an engine (15) including a transversely extended crankshaft (15a), the engine (15) pivotably supported by the vehicle body frame (9);
a radiator (17) disposed transversely outwards of the crankshaft (15a), wherein a portion of the rear frame portion (9d1, 9d2) is positioned forwards of the radiator (17),
at least a portion of the support portion (19a, 19b) is positioned forwards of the radiator (17) and transversely outwards of the rear frame portion (9d1, 9d2),
the vehicle body cover (20) at least partially covers the support portion (19a, 19b) and the rear frame portion (9d1, 9d2) from a transversely outward side,
a first wind guide path (20f) is disposed for guiding an air to a transversely outward side of the radiator (17) through a space positioned above or below the support portion (19a, 19b) and between the vehicle body cover (20) and the rear frame portion (9d1, 9d2), and
the vehicle body cover (20) includes an air intake portion (20b1, 20b2, 20b3, 20b4, 24, 25) for taking in the air into the first wind guide path (20f).

2. A motorcycle according to claim 1, wherein the vehicle body cover (20) at least partially covers the radiator (17) from a transversely outward side.

3. A motorcycle according to claim 1 or 2, wherein the vehicle body cover (20) includes a right lower cover (21d1) at least partially covering the bottom frame portion (9c1, 9c2) from a transversely right side; and a left lower cover (21 d2) at least partially covering the bottom frame portion (9c1, 9c2) from a transversely left side, and a second wind guide path (21 e) is disposed for guiding the air to the first wind guide path (20f) through a space positioned below the first foot rest (21 a) and between the right lower cover (21d1) and the left lower cover (21 d2).

4. A motorcycle according to claim 3, wherein the vehicle body cover (20) further includes a side cover (20d) at least partially covering the radiator (17) from a transversely outward side.

5. A motorcycle according to at least one of the claims 1 to 4, wherein at least a portion of the support portion (19a, 19b) is positioned transversely outwards of the radiator (17).

6. A motorcycle according to claim 5, wherein at least a portion of the support portion (19a, 19b) is positioned lower than a top end of the radiator (17) and higher than a bottom end of the radiator (17).

7. A motorcycle according to at least one of the claims 1 to 6, wherein the second foot rest (18a, 18b) is positioned transversely outwards of the radiator (17).

## Patentansprüche

1. Ein Motorrad mit:
einem Fahrzeug-Körper-Rahmen (9), der beinhaltet: einen Kopf-Rohr-Abschnitt (9a); einen Unterzug-Rahmenabschnitt (9b1, 9b2), der sich nach unten von dem Kopf-Rohr-Abschnitt (9a) erstreckt; einen unteren Rahmenabschnitt (9c1, 9c2), der sich nach hinten von dem unteren Ende des Unterzug-Rahmenabschnitts (9b1, 9b2) erstreckt; und einen hinteren Rahmenabschnitt (9d1, 9d2), der sich nach oben von einem hinteren Ende des unteren Rahmenabschnitts (9c1, 9c2) erstreckt;
einer ersten Fuß-Ablage (21 a), angeordnet über dem unteren Rahmenabschnitt (9c1, 9c2);
einem Lagerabschnitt (19a, 19b), der mit dem hinteren Rahmenabschnitt (9d1, 9d2) verbunden ist;
einer zweiten Fuß-Ablage (18a, 18b), angebracht an dem hinteren Rahmenabschnitt (9d1, 9d2) durch den Lageabschnitt (19a, 19b);
einer Fahrzeugkörper-Abdeckung (20), die zumindest teilweise den hinteren Rahmenabschnitt (9d1, 9d2) abdeckt;
einem Motor (15), der eine, sich quer erstreckende, Kurbelwelle (15a) beinhaltet, der Motor (15) ist schwenkbar durch den Fahrzeug-Körper-Rahmen (9) gelagert;
einem Kühler (17), der quer außerhalb der Kurbelwelle (15a) positioniert ist, wobei ein Abschnitt des hinteren Rahmenabschnitts (9d1, 9d2) vor dem Kühler (17) positioniert ist, zumindest ein Abschnitt des Lagerabschnitts (19a, 19b) ist vor dem Kühler (17) und quer außerhalb des hinteren Rahmenabschnitts (9d1, 9d2) positioniert,
die Fahrzeugkörper-Abdeckung (20) deckt zumindest teilweise den Lagerabschnitt (19a, 19b) und den hinteren Rahmenabschnitt (19d1, 19d2) von einer Quer-Außen-Seite ab, ein erster Wind-Führungs-Pfad (20f) ist positioniert zum Führen von Luft zu einer Quer-Außen-Seite des Kühlers (17) durch einen Raum positioniert oberhalb oder unterhalb des Lagerabschnitts (19a, 19b) und zwischen der Fahrzeugkörper-Abdeckung (20) und dem hinteren Rahmenabschnitt (9d1, 9d2), und
die Fahrzeugkörper-Abdeckung (20) beinhaltet einen Lufteinlass-Abschnitt (20b1, 20b2, 20b3, 20b4, 24, 25), um Luft in den ersten Wind-Führungs-Pfad (20f) aufzunehmen.

2. Ein Motorrad gemäß Anspruch 1, wobei die Fahrzeugkörper-Abdeckung (20) den Kühler (17) zumindest teilweise von einer Quer-Außen-Seite abdeckt.

3. Ein Motorrad gemäß Anspruch 1 oder 2, wobei die Fahrzeugkörper-Abdeckung (20) eine rechte untere Abdeckung (21d1), die zumindest teilweise den unteren Rahmenabschnitt (9c1, 9c2) von einer Querrechtenseite abdeckt; und zumindest eine untere linke Abdeckung (21 d2), die zumindest teilweise den unteren Rahmenabschnitt (9c1, 9c2) von einer Querlinkenseite abdeckt, beinhaltet, und ein zweiter Wind-Führungs-Pfad (21 e) ist zur Führung von Luft zu dem ersten Wind-Führungs-Pfad (21f) durch einen Raum, angeordnet unter der ersten Fuß-Ablage (21 a) und zwischen der rechten unteren Abdeckung (21d1) und der linken unteren Abdeckung (21 d2), positioniert.

4. Ein Motorrad gemäß Anspruch 3, wobei die Fahrzeugkörper-Abdeckung (20) weiterhin eine Seitenabdeckung beinhaltet, die zumindest teilweise den Kühler (17) von einer Quer-Außen-Seite abdeckt.

5. Ein Motorrad gemäß zumindest einem der Ansprüche 1 bis 4, wobei zumindest ein Abschnitt des Lagerabschnitts (19a, 19b) quer außerhalb von dem Kühler (17) positioniert ist.

6. Ein Motorrad gemäß Anspruch 5, wobei zumindest ein Abschnitt des Lagerabschnitts (19a, 19b) niedriger als ein oberes Ende des Kühlers (17) und höher als ein unteres Ende des Kühlers (17) positioniert ist.

7. Ein Motorrad gemäß zumindest einem der Ansprüche 1 bis 6, wobei die zweite Fuß-Ablage (18a, 18b) quer außerhalb von dem Kühler (17) positioniert ist.

## Revendications

1. Motocyclette, comprenant :
- un corps de châssis de véhicule (9) incluant : une portion de tube de tête (9a) ; une portion de châssis bas (9b1, 9b2) étendue vers le bas à partir de la portion de tube de tête (9a) ; une portion de châssis inférieur (9c1, 9c2) étendue vers l'arrière à partir d'une extrémité inférieure de la portion de châssis bas (9b1, 9b2) ; et une portion de châssis arrière (9d1, 9d2) étendue vers le haut à partir d'une extrémité arrière de la portion de châssis inférieur (9c1, 9c2) ;
- un premier repose-pied (21a) disposé au-dessus de la portion de châssis inférieur (9c1, 9c2) ;
- une portion de support (19a, 19b) reliée à la portion de châssis arrière (9d1, 9d2) ;
- un deuxième repose-pied (18a, 18b) fixé à la portion de châssis arrière (9d1, 9d2) par la portion de support (19a, 19b) ;
- une couverture de châssis de véhicule (20) couvrant au moins partiellement la portion de châssis arrière (9d1, 9d2) ;
- un moteur (15) incluant un vilebrequin (15a) étendu transversalement, le moteur (15) étant supporté de façon pivotante par le corps de châssis de véhicule (9) ;
- un radiateur (17) disposé transversalement vers l'extérieur du vilebrequin (15a) ;
- dans laquelle une portion de la portion de châssis arrière (9d1, 9d2) est positionnée en avant du radiateur (17) ;
- au moins une portion de la portion de support (19a, 19b) est positionnée en avant du radiateur (17) et transversalement vers l'extérieur de la portion de châssis arrière (9d1, 9d2) ;
- la couverture de châssis de véhicule (20) couvre au moins partiellement la portion de support (19a, 19b) et la portion de châssis arrière (9d1, 9d2) à partir d'un côté transversalement vers l'extérieur ;
- un premier chemin de guidage de vent (20f) est disposé pour guider un air jusqu'à un côté transversalement vers l'extérieur du radiateur (17) par un espace positionné au-dessus ou au-dessous de la portion de support (19a, 19b) et entre la couverture de châssis de véhicule (20) et la portion de châssis arrière (9d1, 9d2) ; et
- la couverture de châssis de véhicule (20) inclut une portion d'entrée d'air (20b1, 20b2, 20b3, 20b4, 24, 25) pour faire entrer l'air dans le premier chemin de guidage de vent (20f).

2. Motocyclette selon la revendication 1, dans laquelle la couverture de châssis de véhicule (20) couvre au moins partiellement le radiateur (17) à partir d'un côté transversalement vers l'extérieur.

3. Motocyclette selon les revendications 1 ou 2, dans laquelle la couverture de châssis de véhicule (20) inclut une couverture inférieure droite (21d1) couvrant au moins partiellement la portion de châssis inférieur (9c1, 9c2) à partir d'un côté transversalement droit ; et une couverture inférieure gauche (21d2) couvrant au moins partiellement la portion de châssis inférieur (9c1, 9c2) à partir d'un côté transversalement gauche ; et un deuxième chemin de guidage de vent (21e) est disposé pour guider l'air jusqu'au premier chemin de guidage de vent (20f) par un espace positionné au-dessous du premier repose-pied (21a) et entre la couverture inférieure droite (21d1) et la couverture inférieure gauche (21d2).

4. Motocyclette selon la revendication 3, dans laquelle la couverture de châssis de véhicule (20) inclut, en outre, une couverture latérale (20d) couvrant au moins partiellement le radiateur (17) à partir d'un côté transversalement vers l'extérieur.

5. Motocyclette selon au moins l'une des revendications 1 à 4, dans laquelle au moins une portion de la portion de support (19a, 19b) est positionnée transversalement vers l'extérieur du radiateur (17).

6. Motocyclette selon la revendication 5, dans laquelle au moins une portion de la portion de support (19a, 19b) est positionnée plus bas qu'une extrémité supérieure (17) et plus haut qu'une extrémité inférieure du radiateur (17).

7. Motocyclette selon au moins l'une des revendications 1 à 6, dans laquelle le deuxième repose-pied (18a, 18b) est positionné transversalement vers l'extérieur du radiateur (17).
